# EUROPÄISCHE PATENTSCHRIFT

(11) **EP 0 336 516 B1**
(45) Veröffentlichungstag und Bekanntmachung des Hinweises auf die Patenterteilung: **06.07.1994**
(21) Anmeldenummer: 89200846.7
(22) Anmeldetag: 03.04.1989
(51) Int. Cl.: G11B 15/28

(54) **Vorrichtung zum Einstellen der Azimutlage einer Tonwelle in einem Magnetbandgerät**
Device for adjustment of the azimuth position of a capstan in a magnetic tape apparatus
Dispositif de réglage de l'azimut d'un cabestan dans un appareil à bande magnétique

(30) Priorität: 08.04.1988 DE 3811725
(43) Veröffentlichungstag der Anmeldung: 11.10.1989
(73) Patentinhaber: Philips Patentverwaltung GmbH, 22335 Hamburg (DE); Philips Electronics N.V., 5621 BA Eindhoven (NL)
(72) Erfinder: Rumpf, Horst, D-6348 Herborn-Schönach (DE); Klös-Hein, Karl, D-6301 Wettenberg 2 (DE)
(74) Vertreter: Kupfermann, Fritz-Joachim, Dipl.-Ing.

(56) Entgegenhaltungen:
- DE-U- 8 424 844
- FR-A- 2 588 628
- GB-A- 1 585 337
- GB-A- 2 022 904
- GB-A- 2 103 428
- US-A- 3 239 287
- IBM TECHNICAL DISCLOSURE BULLETIN, Bd. 27, Nr. 3. August 1984, New York,US;Seiten 1409 - 1410; D.L.KRIMM et al: "Self-aligning bearing"

## Beschreibung

Die Erfindung bezieht sich auf eine Vorrichtung zum Einstellen der Azimutlage einer Tonwelle in einem Magnetbandgerät gegenüber einer Bezugsebene mit einer Lagerplatte, die ein Tonwellenlager stützt, in dem die Tonwelle geführt ist. Eine solche Vorrichtung ist aus dem Dokument GB-A-2 022 904 bekannt.

Die Lager von Tonwellen lassen sich beim Einsetzen in eine Tragplatte, die eine Bezugsebene darstellt im Verhältnis zu der senkrecht dazu verlaufenden Tonkopffläche, nicht so genau orientieren, daß die später durchgeführte Tonwelle auch wirklich die richtige Azimutlage gegenüber Andruckrollen und Kopffläche einnimmt. Es ist bekannt, die Azimutlage von Tonwellen zu korrigieren, indem das Tonwellenlager um einen gewissen Verdrehwinkel verdreht wird und dabei die Lagerführung eine Kippbewegung ausführt. Ein derartiger Aufbau ist aber nur in engen Grenzen brauchbar.

Es ist Aufgabe der Erfindung, eine Vorrichtung der eingangs erwähnten Art zu schaffen, die einfach und stabil ist und die es erlaubt, jede gewünschte Azimutlage ohne Schwierigkeiten einzustellen.

Die gestellte Aufgabe ist erfindungsgemäß dadurch gelöst, daß das Tonwellenlager bzw. ein Teil desselben mit der Lagerplatte über wenigstens drei einfach oder mehrfach U-förmige Tragstreifen aus Blech verbunden ist, die rings um das Tonwellenlager gleichmäßig verteilt an diesem angreifen.

Mittels der einfach oder mehrfach U-förmigen Tragstreifen aus Blech läßt sich das in der Mitte sitzende Tonwellenlager durch Verbiegen der Tragstreifen auch mit Hilfe eines automatischen Werkzeuges leicht in die gewünschte Lage bringen.

Nach einer weiteren Ausgestaltung der Erfindung ist vorgesehen, daß an den Angriffsstellen des Streifens am Tonwellenlager und an der Lagerplatte sowie im Bereich der Schenkelverbindungen Soll-Biegestellen vorgesehen sind. Solche Soll-Biegestellen machen die Vorrichtung biegeelastischer.

Nach einer weiteren Ausgestaltung der Erfindung ist vorgesehen, daß die Soll-Biegestellen als Einschnürungen des Streifens ausgebildet sind, wobei in weiterer Fortbildung vorgesehen ist, daß die Einschnürungen bogenförmig ausgebildet sind. Einschnürungen mit bogenförmigen Rändern, die sich in den Streifen hineinbiegen, führen zu einer weiteren Verbesserung der Biegeelastizität.

Wenn an sich drei Tragstreifen genügen, so kann es aber von Vorteil sein, vier zu einem Kreuz angeordnete Tragstreifen zu verwenden.

Nach einer weiteren Ausgestaltung der Erfindung ist vorgesehen, daß die Tragstreifen durch Wegdrücken ihres seitlichen Randmaterials aus der Lagerplatte gebildet sind und das Tonwellenlager in einen die Tragstreifen in der Mitte verbindenden Tragring eingesetzt ist, der aus dem beim Wegdrücken stehen gebliebenen Material der Lagerplatte besteht. Werden die Tragstreifen so aus der Tragplatte selbst gebildet zusammen mit einem mittleren Tragring, in den dann das Tonwellenlager einsetzbar ist, dann läßt sich die Vorrichtung zum Einstellen der Azimutlage gleich beim Drücken oder Pressen der Tragplatte mit bilden. Die Einrichtung der Vorrichtung zum Einstellen der Azimutlage bedarf damit keiner besonderen, getrennten Arbeitsgänge.

Die Erfindung wird anhand der Zeichnung näher erläutert. Es zeigen:
Fig. 1 einen Ausschnitt aus einer Spurlagerplatte mit U-oder mäanderförmig ausgebildeten Tragstreifen für einen Tragring, der ein Gegenlager zur Führung einer Tonwelle aufnimmt,
Fig. 2 einen Schnitt durch die gesamte Tonwellenlagerung mit einem Gegenlager in einer Spurlagerplatte,
Fig. 3 die Vorrichtung nach Fig. 1 mit verschobenem Tragring.

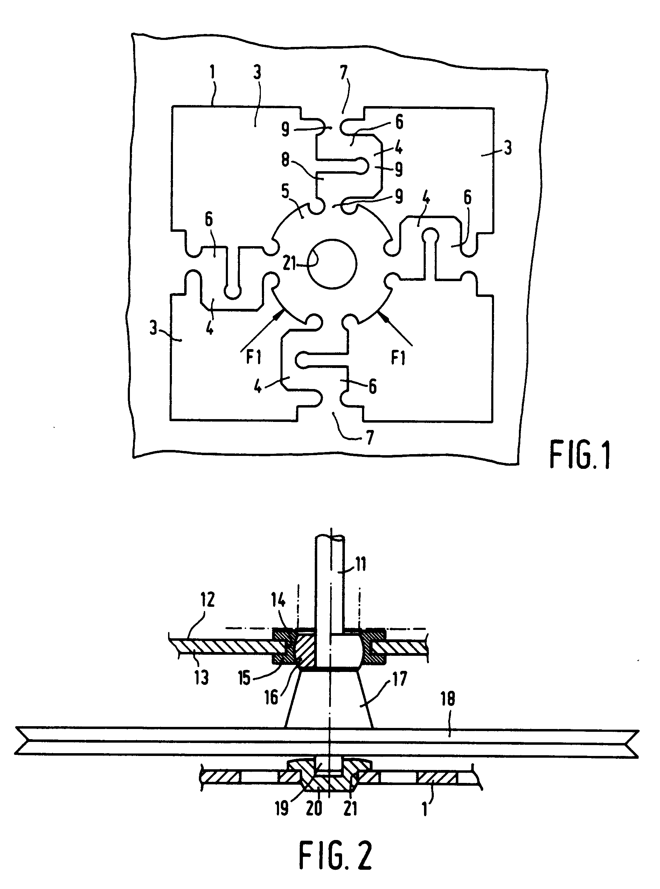

Mit 1 ist in Fig. 1 eine Spurlagerplatte bezeichnet, die mit Ausdrückungen oder Ausstanzungen 3 versehen. Zwischen den Ausstanzungen 3 sind Tragstreifen 4 stehengeblieben, die die Spurlagerplatte mit einem mittleren Tragring 5 verbinden. Es sind vier Tragstreifen 4 vorgesehen, die im Kreuz angeordnet sind.

Jeder der Tragstreifen hat eine U- oder mäanderförmige Formung. Die Schenkel 6 greifen jeweils am Rand 7 der Spurlagerplatte an, und die Schenkel 8 tragen den Tragring 5. Es sind Einschnürungen 9 vorgesehen, die sich jeweils im Übergang von dem Rand 7 der Spurlagerplatte und einem Schenkel 6, im Bereich der Basis der U's und im Übergang von den Schenkeln 8 zu dem Tragring 5 befinden. Diese Einschnürungen sind bogenförmig nach innen geführt und verbessern die Verbiegbarkeit des gesamten Gebildes.

Durch das Aufbringen von Kräften F₁ werden die Streifen 4 in der Spurlagerplatte 1 so plastisch verformt, daß der Mittelpunkt 10 des Tragringes 5 sich um einen gewünschten Betrag in der Spurlagerplattenebene XY verschiebt. Dadurch kann die Tonwelle 11 (Fig. 2) senkrecht zu einer Bezugsebene 12, die beispielsweise die Oberfläche der Kassettenauflage 13 sein kann, eingestellt werden.

Fig. 2 zeigt ein Ausführungsbeispiel einer Lagerung, das jedoch nicht in dieser Ausführung zwingend notwendig konstruiert sein muß. In die Kassettenauflage 13 bzw. ein in ihr vorgesehenes Loch 14 ist ein Kunststoffring 15 eingeklemmt, das ein balliges Lager 16 trägt. Durch das Lager 16 ist die Tonwelle 11 hindurchgeführt.

Mit der Tonwelle fest verbunden über einen versteifenden Konus ist ein Schwungrad 18, das mittels eines Keilriemens angetrieben wird. Unterhalb der Schwungscheibe 18 greift ein Wellenstumpf 19 der Tonwelle 11 in ein Gegenlager 20 des Tonwellenlagers. Dieses Gegenlager 20 ist in ein Loch 21 des Tragringes 5 eingesetzt.

Wird der Tragring 5 aufgrund der auf ihn aufgebrachten Kräfte F₁, F₂ in der Ebene der Spurlagerplatte 1 verschoben in X/Y-Richtung, dann wirkt sich dies auf die Azimutlage der Tonwelle 11 gegenüber der Kassettenauflage 13 aus. Durch das Verstellen des Tragringes 5 läßt sich also die Azimutlage der Tonwelle gegenüber Andruckrollen und Kopffläche des Tonkopfes einstellen. Die Einstellung kann auf einfache Weise mittels eines Werkzeuges erfolgen.

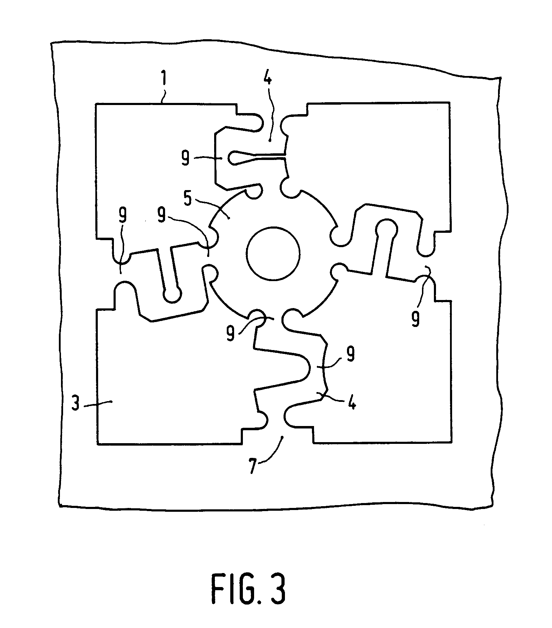

Bei der Darstellung nach Fig. 3 haben die Kräfte F₁ und F₂ den Tragring verschoben, wobei die Kraft F₁ größer war als die Kraft F₂. Man erkennt, wie sich die Einschnürungen 9 durch das Verschieben verändert haben.

## Patentansprüche

1. Vorrichtung zum Einstellen der Azimutlage einer Tonwelle (11) in einem Magnetbandgerät gegenüber einer Bezugsebene (12) mit einer Lagerplatte (1), die ein Tonwellenlager (20) stützt, in dem die Tonwelle (11) geführt ist, dadurch gekennzeichnet, daß das Tonwellenlager (20) bzw. ein Teil desselben mit der Lagerplatte (1) über wenigstens drei einfach oder mehrfach U-förmige Tragstreifen (4) aus Blech verbunden ist, die rings um das Tonwellenlager (20) gleichmäßig verteilt an diesem angreifen.

2. Vorrichtung nach Anspruch 1, dadurch gekennzeichnet, daß an den Angriffsstellen (7, 8) der Streifen (4) am Tonwellenlager (20) und an der Lagerplatte (1) sowie im Bereich der Schenkelverbindungen Soll-Biegestellen (9) vorgesehen sind.

3. Vorrichtung nach Anspruch 2, dadurch gekennzeichnet, daß die Soll-Biegestellen (9) als Einschnürungen des Streifens ausgebildet sind.

4. Vorrichtung nach Anspruch 3, dadurch gekennzeichnet, daß die Einschnürungen (9) bogenförmig ausgebildet sind.

5. Vorrichtung nach Anspruch 1, dadurch gekennzeichnet, daß vier im Kreuz angeordnete Tragstreifen (4) vorgesehen sind.

6. Vorrichtung nach einem der Ansprüche 1 bis 3 und 5, dadurch gekennzeichnet, daß die Tragstreifen (4) durch Wegdrücken ihres seitlichen Randmaterials aus der Lagerplatte (1) gebildet sind und das Tonwellenlager (20) in einen die Tragstreifen (4) in der Mitte verbindenden Tragring (5) eingesetzt ist, der aus dem beim Wegdrücken stehengebliebenen Material der Lagerplatte (1) besteht.

## Claims

1. A device for adjusting the azimuth position of a capstan (11) in a magnetic-tape apparatus relative to a reference plane (12), comprising a bearing plate (1) which supports a capstan bearing (20) in which the capstan (11) is journalled, characterised in that the capstan bearing (20) or a part thereof is connected to the bearing plate (1) *via* at least three single or multiple U-shaped supporting strips (4) of a sheet-metal, which engage and are equidistantly spaced around the capstan bearing (20).

2. A device as claimed in Claim 1, characterised in that preformed bending spots (9) are provided at the locations (7, 8) where the strips (4) engage with the capstan bearing (20) and with the bearing plate (1), and at the locations of the limb junctions.

3. A device as claimed in Claim 2, characterised in that the preformed bending spots (9) are formed as constrictions of the strip.

4. A device as claimed in Claim 3, characterised in that the constrictions (9) are arcuate.

5. A device as claimed in Claim 1, characterised in that it comprises four supporting strips (4) arranged as a cross.

6. A device as claimed in any one of the Claims 1 to 3 and 5, characterised in that the supporting strips (4) are formed by removing the peripheral material of the bearing plate (1) and the capstan bearing (20) is mounted in a supporting ring (5) which interconnects the supporting strips (4) in the centre and consists of the non-removed material of the bearing plate.

## Revendications

1. Dispositif de réglage de l'azimut d'un cabestan (11) dans un appareil à bande magnétique par rapport à un plan de référence (12) comportant une plaque à crapaudine (1), qui soutient une crapaudine (20) dans laquelle le cabestan (11) est guidé, caractérisé en ce que la crapaudine (20) du cabestan ou une partie de celle-ci est reliée à la plaque à crapaudine (1) via au moins trois bandes de support (4) en forme de U simples ou multiples en tôle, qui sont solidaires de la périphérie de la crapaudine (20) du cabestan, et sont régulièrement espacées autour de celle-ci.

2. Dispositif selon la revendication 1, caractérisé en ce que des points de flexion prévue (9) sont ménagés aux points de liaison (7, 8) de la bande (4) à la crapaudine (20) du cabestan et à la plaque à crapaudine (1) ainsi que dans la zone de liaison des branches.

3. Dispositif selon la revendication 2, caractérisé en ce que les points de flexion prévue (9) se présentent sous la forme d'étranglements de la bande.

4. Dispositif selon la revendication 3, caractérisé en ce que les étranglements (9) sont courbés en arc.

5. Dispositif selon la revendication 1, caractérisé en ce que quatre bandes de support (4) agencées en croix sont prévues.

6. Dispositif selon l'une quelconque des revendications 1 à 3 et 5, caractérisé en ce que les bandes de support (4) sont formées par estampage de la plaque à crapaudine (1) pour éliminer ses parties latérales marginales et la crapaudine (20) du cabestan est montée dans une bague de support (5) reliant les bandes de support (4) au centre, cette bague étant faite de la matière de la plaque à crapaudine (1) subsistant après estampage.
